# EUROPEAN PATENT APPLICATION

(11) **EP 1 429 228 A2**
(43) Date of publication of application: **16.06.2004**
(21) Application number: 03257804.9
(22) Date of filing: 11.12.2003
(51) Int. Cl.: G06F 1/00

(54) **Access information synchronization between information domains employing dissimilar protective transformation**

(30) Priority: 12.12.2002 US 432829 P; 07.01.2003 US 438386 P; 12.08.2003 US 639118
(71) Applicant: Sun Microsystems, Inc., Santa Clara, California 95054 (US)
(72) Inventor: Lavender, Robert Gregory, Austin Texas 78759 (US); Wahl, Mark, Austin Texas 78737 (US); Baldwin, Duane, Woodridge IL 60517 (US); Coulbeck, Andrew, Austin Texas 78729-8056 (US); Kolics, Bertold, Austin Texas 78727 (US)
(74) Representative: Davies, Simon Robert

(57) **Abstract**

Mechanisms are provided for synchronizing information amongst directory spaces or repositories that employ dissimilar protective transformations. In some embodiments, directory spaces are embodied as directory servers, services or similar components of computer operating systems. In some embodiments, dissimilar protective transformations include differing hashes (or encryption) techniques or facilities employed by products available from Sun Microsystems, Inc., on the one hand, and Microsoft Corporation on another. The mechanism is responsive to a change in the second store, invalidating a corresponding entry in the first store. Upon receipt, by the first store, of an authentication request that includes a credential and which corresponds to the invalidated entry, the method chains the authentication request to the second store. If the authentication at the second store is successful, the method updates the previously invalidated entry of the first store with the credential.

## Description

### Field of the Invention

The present invention relates generally to synchronization amongst information domains, such as directory spaces or repositories, that employ dissimilar protective transformations, e.g., hashes, encryption, etc.

### Background of the Invention

Access to information and resources can be controlled through the processes of authentication and authorization. Typically, an entity (e.g., a client and/or user) authenticates by providing information to establish its identity. Once the entity has authenticated, authority (e.g., access rights) is granted to the entity based on the authenticated identity. Information used to verify the identity and privileges of an entity may be stored as entries in a directory system or service. Entries in such systems are typically encoded with a protective transform for security purposes. In different systems (or for that matter in different domain instances of similar systems), dissimilar protective transforms may be employed. Typically, the protective transforms (e.g., a hash, encryption, etc.) are designed to be irreversible or at least irreversible to all but the system (or systems) employing a shared key. Directory services, such as those included with the Sun One Directory Server, available from Sun Microsystems, Inc., which implement standards-based repositories (e.g., based on LDAP or UDDI standards), or those such as Active Directory, implemented by operating systems available from Microsoft Corporation, are common examples. As a result, information encoded in one system cannot generally be used to update that information in another system. Accordingly, techniques are desired whereby information (e.g., user password information) updated in one information domain can be propagated to another information domain.

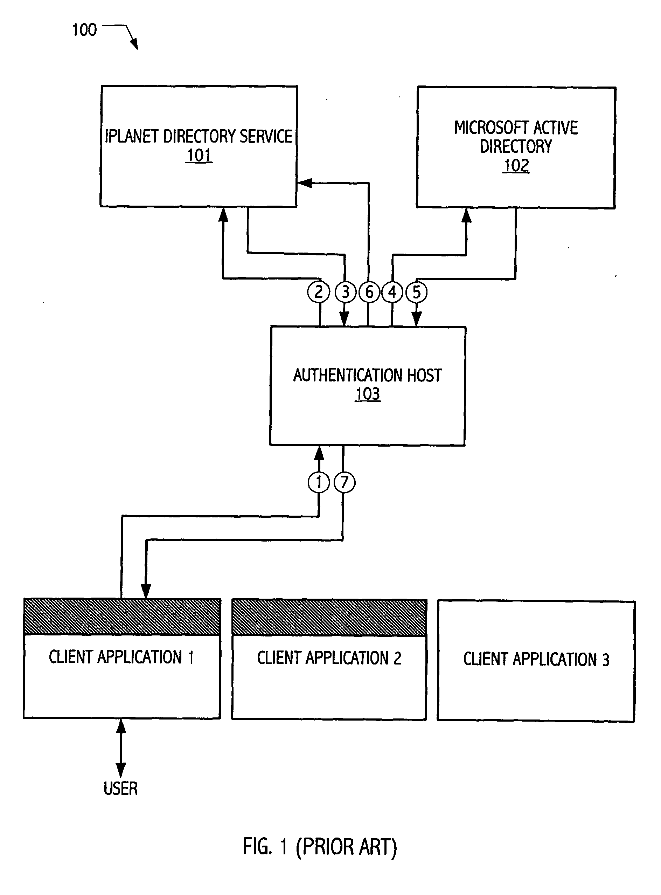

FIG. 1 illustrates one prior art technique of synchronizing password data in directory systems. A user provides information (e.g., user identification and password) to client application 1. Client application 1 provides this information to authentication host 103 in authentication request 1. Authentication host 103 sends an authentication request 2 to first store 101. If authentication response 3 indicates a successful authentication, (e.g., the user password equals the password entry in first store 101) response 7 communicates this successful authentication to client application 1. If authentication response 3 indicates failure to authenticate (e.g., the password does not match the password entry in first store 101), authentication host 103 sends authentication request 4 to second store 102. If authentication response 5 from second store 102 indicates a failure to authenticate, authentication host response 7 informs client application 1 that the user information failed to authenticate. If authentication response 5 from second store 102 indicates a successful authentication (e.g., the password matches the password entry in second store 102), authentication host response 7 informs client application 1 that the user information authenticated, and push 6 synchronizes relevant entries of first store 101 to entries of the second store 102.

Authentication requests 1, 2, and 4 communicate passwords in clear text, increasing the security risks for a system using this prior art technique. Each client application requires modifications to provide an interface for communication with authentication host 103. For example, if client application 1 has been modified to interface with authentication host 103, but client application 3 does not include the modification, then client application 3 will fail to synchronize passwords with entries of second store 102. In addition, if second store 102 is authoritative (i.e., second store 102 is the source of information updates), first store 101 may continue to authenticate obsolete credentials until updated credentials are pushed from authentication host 103 to first store 101 following an unsuccessful authentication at first store 101. The prior art method also requires that both first store 101 and second store 102 have the privileges to change passwords.

### Summary of the Invention

Accordingly, one embodiment of the invention provides a method and apparatus for synchronizing information, e.g., password or other access credential information, amongst directory spaces or repositories, that employ dissimilar protective transformations, e.g., hashes, encryption, etc. In some embodiments, directory spaces are embodied as directory servers, services or similar components of computer operating systems, including LDAP, UDDI, Active Directory or other standardized or proprietary directory environments. In some embodiments, dissimilar protective transformations include differing hashes (or encryption) techniques or facilities employed by products available from Sun Microsystems, Inc., on the one hand, and Microsoft Corporation on another.

In one embodiment in accordance with the present invention, a method of synchronizing credentials between first and second stores that employ dissimilar protective transforms is provided. At least one of the first and second stores may be embodied as a directory service. At least one of the first and second stores may be embodied as an authentication or access control service. At least the first store may be embodied as a service that provides authentication. The method is responsive to a change in the second store, by invalidating a corresponding entry in the first store. Upon receipt, by the first store, of an authentication request that includes a credential and which corresponds to the invalidated entry, the method chains the authentication request to the second store. If the authentication at the second store is successful, the method updates the previously invalidated entry of the first store with the credential. The updating may include encoding the credential using a first of the dissimilar protective transforms. The updating may be performed without reversing a second of the dissimilar protective transforms. At least one of the dissimilar protective transforms may be generally irreversible. The change in the second store may include a change of the credential or a change to an entry that encodes the credential.

Such a mechanism helps to efficiently and securely maintain entries of information stores.

In some embodiments, the method includes accessing a change log of the second store to detect the change. In some embodiments, the method includes accessing a change notification service of the second store to detect the change. In some embodiments, the method includes calling an interface of the second store to detect the change. In some embodiments, the method includes intercepting the change and signaling same. The updating may include revising the previously invalidated entry. The updating may include replacing the previously invalidated entry with a valid instance thereof, including the credential. The invalidated entry may be marked as such using an invalid, non-authoritative or expiry indicator. The invalidated entry may encode the credential. The invalidated entry may include at least a portion of a user or entity record corresponding to the credential. In some embodiments, the method causes the change in the second store. In some embodiments, upon receipt by the first store, of a second authentication request including a second credential and not corresponding to an invalidated entry, the method authenticates against the first store and, if unsuccessful, chains the authentication request to the second store. At least one of the first and second stores may be implemented, at least in part, as part of an operating system. The first and second stores may reside on the same computer or on different computers. The method may be implemented, at least in part, as a polling agent that detects the change and triggers the invalidating. The method may be implemented, at least in part, as functionality exercisable by a directory service. In one embodiment, a computer program product for implementing such a method is encoded on one or more computer readable media selected from the set of disk, tape or other magnetic, optical or electronic storage medium and a network, wireline, wireless or other communications medium.

In another embodiment in accordance with the present invention, a method of synchronizing between first and second information domains that employ dissimilar protective transforms maintains a mapping between an entry of the first information domain and an entry of the second information domain. The method is responsive to detection of a change to one of the mapped entries in the second information domain, marking as invalid at least a corresponding element of the mapped entry of the first information domain. Upon presentation of information corresponding to the marked element, the method validates the presented information against the second information domain and, if validated, stores a representation thereof in the first information domain. The validating and the storing employ the dissimilar protective transforms. In some embodiments, the method detects the change. The first and second information domains may include directories. The information corresponding to the marked element may include a user password. The information corresponding to the marked element may include a credential. At least one of the dissimilar protective transforms may include encryption. At least one of the dissimilar protective transforms may include a hash. The dissimilar protective transforms may employ differing keys. The dissimilar protective transforms may employ differing transformations. At least one of the dissimilar protective transforms may be generally irreversible. The mapping may be represented at least in part using an entity unique identifier stored in the first information domain. In some embodiments, the method polls a change log of the second information domain to identify the changed entry. In some embodiments, the method calls an interface of the second information domain to identify the changed entry. In some embodiments, the method intercepts the change and signals the change. The method may be implemented, at least in part, as a plug-in component of a service corresponding to the first information domain and a polling agent that performs the change detection. The method may be performed without customization of the second information domain. One embodiment of the invention provides a computer program product for implementing such a method, encoded in one or more computer readable media selected from the set of disk, tape or other magnetic, optical or electronic storage medium and a network, wireline, wireless or other communications medium.

In another embodiment in accordance with the present invention, a computer program product synchronizes a credential encoded by a first service with that encoded by a second service. The first and second service encodings employ dissimilar protective transforms. A first service credential encoding is mapped to a corresponding second service encoding. The synchronization is performed in response to an invalidity indication for the first service credential encoding. At least one of the first and second services may be implemented as a directory authentication or access control service. The synchronization may be performed without reversing the protective transform employed by the second service. The invalidity indication may be set in response to a change in the second service. In some embodiments, a polling agent detects a change in the second service and sets the invalidity indication in response thereto. The mapping may be maintained by the first service. The invalidity indication may be encoded by the first service. The invalidity indication may be encoded using one or more of an invalidity, non-authoritative or expiry indictor.

In another embodiment in accordance with the present invention, a password synchronization facility includes an authentication service that chains to a second service authentication requests corresponding to invalidated entries of the authentication service and, on successful authentication against the second service, updates a corresponding credential encoding of the authentication service. The facility further includes a polling agent that detects changes to entries of the second service and triggers invalidation of the corresponding credential encoding of the authentication service. In some embodiments, the password synchronization facility includes the second service.

In another embodiment in accordance with the present invention, a password synchronization facility includes a polling agent that detects changes to entries of a credential store and triggers invalidation of corresponding credential encodings of an authentication service, thereby causing the authentication service to chain to a second service authentication requests corresponding to invalidated entries and, on successful authentication against the second service, updates a corresponding credential encoding of the authentication service. The password synchronization facility may include the authentication service. The password synchronization facility may include the second service.

### BRIEF DESCRIPTION OF THE DRAWINGS

Various embodiments of the invention will now be described in detail by way of example only with reference to the following drawings:
**FIG. 1** illustrates a prior art method for authenticating an entity.
**FIG. 2** illustrates a system for authenticating information in accordance with some embodiments of the present invention.
**FIG. 3** depicts information and control flows for an invalidation technique in accordance with some embodiments of the present invention.
**FIG. 4** depicts information and control flows for a synchronization technique in accordance with some embodiments of the present invention.
**FIG. 5** illustrates an information store employing directory replication in accordance with some embodiments of the present invention.
**FIG. 6** depicts information and control flows for a mechanism of replica handling in accordance with some embodiments of the present invention.
**FIG. 7** depicts information and control flows for a mechanism of replica handling in accordance with some embodiments of the present invention.

The use of the same reference symbols in different drawings indicates similar or identical items.

### Detailed Description

A series of mechanisms have been developed for synchronizing information, e.g., password or other access credential information, amongst directory spaces or repositories, that employ dissimilar protective transformations, e.g., hashes, encryption, etc. In some illustrative embodiments, directory spaces are embodied as directory servers, services or similar components of computer operating systems, including Lightweight Directory Access Protocol (LDAP), Universal Description, Discovery and Integration (UDDI), Active Directory or other standardized or proprietary directory environments. In some illustrative embodiments, dissimilar protective transformations include differing hash (or encryption) techniques or facilities employed by products available from Sun Microsystems, Inc., on the one hand, and Microsoft Corporation on another. In some illustrative embodiments, directory spaces may be replicated. However, the techniques described herein are not limited to such particular embodiments.

The designs presented herein are illustrative and provide persons of ordinary skill in the art with an understanding of the invention. Based on the description herein, persons of ordinary skill in the art will appreciate that the invention is not limited to the particular exploitations described. In particular, design goals or constraints peculiar to the illustrative embodiments may not affect other embodiments, and the techniques described herein have important applications to the more general problem of synchronization amongst information domains. Further, the particular embodiments described are not unitary, features of particular embodiments may be omitted for certain environments.

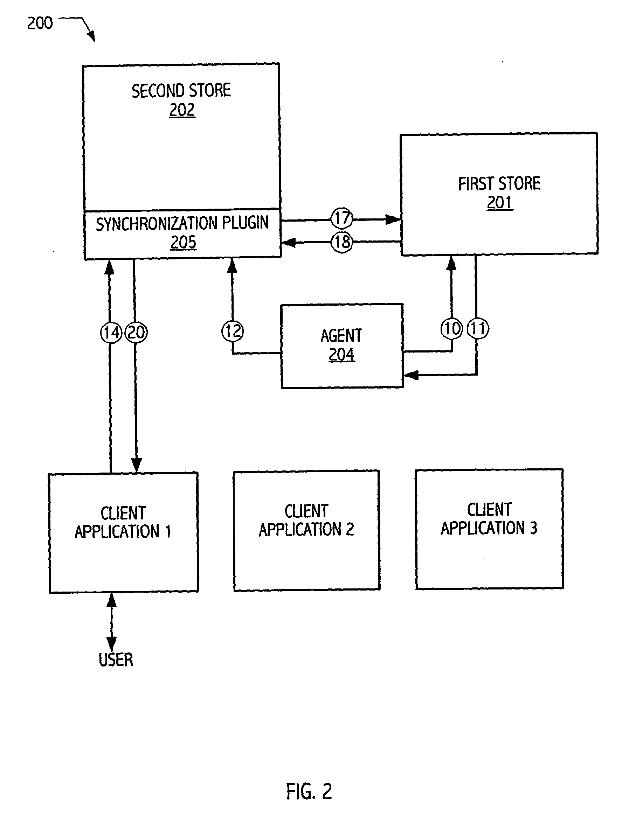

Referring to FIG. 2, example computer system 200 includes first store 201, second store 202, agent 204, synchronization plug-in 205, and client applications 1-3. First store 201 and second store 202 may be embodied as directory services or as authentication or access control services. First store 201 and second store 202 may reside on the same or different computers. First store 201 and second store 202 include data entries, which may include userids, password, credential data, or other information. The data entries of first store 201 and second store 202 are typically encoded using dissimilar protective transforms (e.g., encryption, hash, dissimilar protective transforms with different keys). As will be generally appreciated by persons of ordinary skill in the art, such protective transforms are generally irreversible, i.e., reversal or decryption is computationally infeasible given typical computational facilities and time allowed, without an appropriate key (if any). First store 201 is the authoritative domain for at least some of the entries in second store 202 (i.e., data changes are made at first store 201 and subsequently communicated to second store 202).

Agent 204 and synchronization plug-in 205 are associated with second store 202, i.e., agent 204 invalidates data entries of second store 202 upon detecting changes to corresponding entries in first store 201. Agent 204 may be integrated with first store 201, second store 202, or exist as a separate component in computer system 200. In computer system 200, plug-in 205 is a software module that customizes or extends the functionality of the directory server. Synchronization plug-in 205 chains an authentication to first store 201. Thus, synchronization plug-in 205 extends the authentication process of computer system 200 because without synchronization plug-in 205, second store 202 would have no knowledge of first store 201. In some embodiments, synchronization plug-in 205 is included in second store 202. For example, synchronization plug-in 205 may be installed by including appropriate files in the lib directory under the installation root directory of an iPlanet Directory Server, or similar environment, and by adding configuration information to the directory server via an ldapmodify command line utility. Agent 204 and synchronization plug-in 205 attain the synchronization of information stored in second store 202 to the entries in first store 201, without reversing the protective transform of first store 201 (e.g., by comparing encoded entries).

### Invalidation

In general, invalidation of an entry may be achieved by setting an invalidity, non-authoritative, expiry or other similar indicator appropriate to a given system. In computer system 200, invalidation is achieved by setting an invalidation attribute associated with the entry of second store 202 or by any other method for indicating that an entry to an information store requires synchronization. In a next attempt by a client application to authenticate against the invalidated entry in second store 202, the invalidation triggers synchronization plug-in 205 to synchronize the entry in second store 202 to the information for the corresponding entry in first store 201.

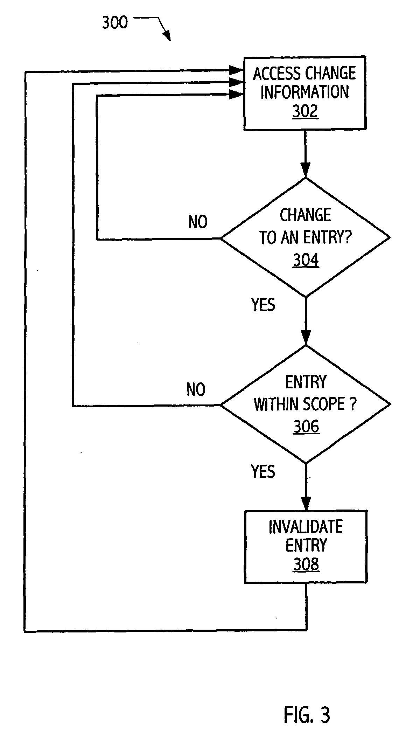

Entries of second store 202 may include an attribute for invalidating the information associated with that entry. Agent 204 may be configured to set this attribute for an entry when agent 204 detects a change to a corresponding entry in first store 201. In some embodiments, computer system 200 performs the steps illustrated in FIG. 3. Agent 204 accesses (302) change information associated with the entries in first store 201. Agent 204 may access this change information by sending a request for change information 10 to first store 201 and receiving change information in response. Request for change information 10 may be sent periodically and the frequency of these requests may be programmable. Alternatively, first store 201 or an entity associated therewith, may communicate change information by a preprogrammed periodic communication, thus eliminating the need for request for change information 10. If agent 204 periodically requests update information, agent 204 is configured with a request interval, which may be programmable in some embodiments. For example, the agent may periodically request update information on an hourly, daily, or weekly basis. First store 201 may also acquire change information by intercepting changes and signaling agent 204 of these changes.

Entries of first store 201 and second store 202 may be identified by object guid or distinguished names (DNs). In computer system 200, agent 204 is responsive to a particular DN and password for communication with second store 202. Information stored in first store 201 may be known by a DN different from that used in second store 202. First store 201 maintains a mapping between entries of first store 201 and second store 202. Agent 204 is configured to access a particular attribute of the information entries stored in second store 202. This attribute stores the DN used by first store 201 to reference the entry. A configuration attribute specifies to agent 204 which attribute of entries in second store 202 stores the DN for the first directory service to facilitate mapping from second store 202 to first store 201. During the invalidation procedure, agent 204 may look up entries in second store 202 that correspond to changed entries of first store 201 by sending a request to second store 202 to return an entry having a particular attribute with a particular value. In some embodiments, second store 202 may process that query by searching entries of a directory tree for an entry meeting the request criteria. In some embodiments, an equality index for an attribute speeds up the invalidation procedure performed by agent 204. In general, an equality index for an attribute includes an entry for values of the attribute in second store 202. When second store 202 processes a query from agent 204, the equality index is referenced to find the entry based on the value of the attribute. Referencing the equality index to find the entry is typically faster than searching a tree of entries in second store 202 for an entry that matches a search criteria.

Referring back to FIG. 2, response 11 provides change information to agent 204. Change information may include information stored in a change log, an update sequence number, or other information indicating a change. A change log is a database that records all changes made to first store 201. As each change is received by first store 201, a unique change number is assigned, and the number is logged to the change log. Agent 204 determines (304) from the change information whether an entry of first store 201 has changed. Referring to FIG. 3, if no change is detected, agent 204 continues to access (302) change information for detecting change to entries of first store 201 by whichever method agent 204 is configured for accessing the information.

If more than one directory exists in a system, each directory or store may include an agent that corresponds to that directory for synchronizing that directory to the authoritative directory or directories. In some embodiments, the change scope is a physical or conceptual partition (e.g., database or subtree of entries, a domain in Active Directory, db context in Sun ONE Directory Server) within a repository for which a synchronization component is responsible for synchronizing. The synchronization scope may be a logical grouping of entries (e.g., users) within a change scope. This grouping is used to determine the route of entry change messages on a transport and protocol mechanism used to communicate between components for managing updates between one or more repositories with one or more subcomponents that handle the specialized interaction with the respositories (e.g., the iPlanet Message Queue). In some embodiments, upon determining the synchronization scope to which an entry belongs, a synchronization scope identifier may be used as part of a message that will carry the entry change to a managing agent. In some embodiments, the synchronization scopes are not nested. Matching synchronization scope for an entry may be determined by searching the synchronization scopes for the components that support a particular partition of a repository. Synchronization of particular entries may be selectively disabled via an attribute used to configure the synchronization agent. If a change is detected (304), agent 204 determines (306) whether the entry is within its change scope. If the changed entry is not within its change scope, agent 204 continues to access (302) change information for detecting changes to entries of first store 201. If the entry is within the change scope of agent 204, agent 204 invalidates the entry (308). Agent 204 sends invalidation instruction 12 to second store 202 to invalidate an entry in second store 202 corresponding to the changed entry of first store 201. In some embodiments, synchronization plug-in 205 invalidates an entry by setting the invalidation flag corresponding to the outdated entry in second store 202.

In some file-system based embodiments, agent 204 is configured with full paths to directories for accessing log and state files to facilitate interactions with first store 201 and second store 202. Information content associated with first store 201 may be represented in second store 202 using a single one of several servers, although this information may be distributed amongst several servers. Entry location information may be provided by a list of paths to those LDAP URLs for servers that are authoritative for second store 202. Agent 204 is configured with the pathname for second store 202 as included among a list of pathnames for information stores that are synchronized to first store 201. Where the information is stored in domain configuration, a subtree list identifies those trees where information entries of this domain may be found.

In some embodiments, the global configuration includes a maximum allowed clock skew between agent 204 and any controller for information stores 201 and 202. The clock skew is irrespective of time zone differences. Agent 204 and controllers for information stores 201 and 202 may operate in different time zones. The maximum allowed clock skew may be adjusted to properly detect and avoid losing information changes.

### On-Demand Password Synchronization

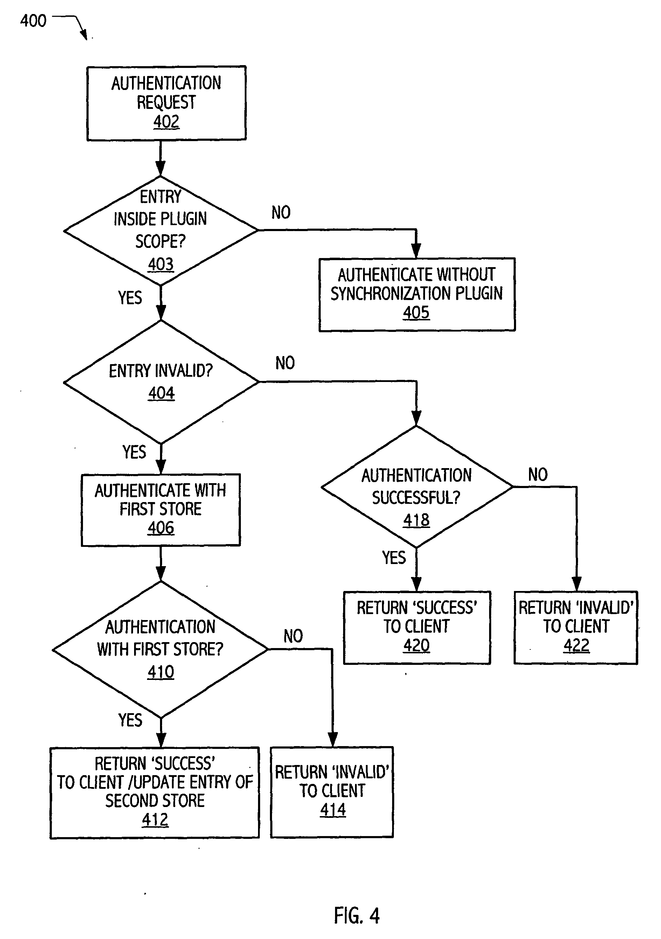

Referring to FIG. 2 and FIG. 4, synchronization plug-in 205 captures password changes and synchronizes entries on-demand. Information entries in first store 201 may be encoded using a suitable protective transform, making the clear text entry from first store 201 unavailable to second store 202 and synchronization plug-in 205. Instead, synchronization plug-in 205 obtains the clear text updated information from a client application when the client attempts to authenticate. Client application 1 attempts to authenticate (402) by sending clear text userid and password information to synchronization plug-in 205 via authentication request 14.

To reduce the risk of compromising security, synchronization plug-in 205 preferably does not write the clear text password values to a log or similar record. In some embodiments, synchronization plug-in 204 receives the clear text information, and maintains this information only so long as to reversibly encrypt the information with an encryption utility. The encryption may be performed by using underlying encryption mechanisms of a secure sockets layer (SSL) protocol implementation or other encryption facilities. In the illustrated configuration, synchronization plug-in 205 is configured with a full path to a certificate database although other configurations may access similar information in other ways. The certificate authority that issues the server certificates for first store 201 may be imported, or alternatively, the certificate database may be copied for installation and use by synchronization plug-in 205. When SSL communication is enabled, the LDAP URL for a store that requires SSL encryption includes an SSL indicator in the LDAP URL.

Synchronization plug-in 205 determines (403) whether the user entry is within synchronization scope of synchronization plug-in 205. If the entry is not within the synchronization scope of synchronization plug-in 205, authentication proceeds (405) using any suitable method employed by computer system 200, without synchronization plug-in 205. If the entry is within the synchronization scope of synchronization plug-in 205, synchronization plug-in 205 attempts to authenticate with an entry of second store 202 by authenticating at second store 202. Synchronization plug-in 205 determines (404) whether an entry is invalidated. If the entry is valid, synchronization plug-in 205 then attempts to authenticate (418) the identity information. If the client information authenticates, synchronization plug-in 205 returns 'success' (420) to client application 1 in response 20.

If the entry in second store 202 is invalid (404), synchronization plug-in 205 chains the authentication to first store 201, i.e., sends authentication request 17 (406), which in some embodiments may be an LDAP bind request, to first store 201. First store 201 sends authentication response 18 to synchronization plug-in 205. If synchronization plug-in determines (410) that the identity information does not authenticate, synchronization plug-in 205 returns 'invalid' (414) to client application 1 in response 20. Alternatively, if synchronization plug-in 205 determines (410) that the identity is valid based on authentication response 18, synchronization plug-in 205 synchronizes the entry of second store 202 (412). Synchronization plug-in 205 updates the entry of second store 202 with the information received in clear text from client application 1. Updates may be made by changing the entry or by replacing the entry with a valid instance of the entry. In some embodiments, the information is encrypted using a protective transform dissimilar to the protective transform utilized by first store 201. In addition, synchronization plug-in 205 clears the invalidation attribute for the user entry and, synchronization plug-in 205 returns 'success' to client application 1.

Synchronization plug-in 205 logs information, warnings, and error messages according to the log level setting of a host directory server. In addition to the log facility provided by the directory server, synchronization plug-in 205 may send log messages about server errors to the directory system manager. Typically, synchronization plug-in 205 is also configured with the name of the attribute in the second store that holds the domain name for the first directory service. The name of the attribute that is used for invalidation by agent 204 is also identified to synchronization plug-in 205. Synchronization plug-in 205 checks this attribute upon each authentication. When the attribute is set, synchronization plug-in 205 will force password verification against an authoritative domain (e.g., domain controller) in the first directory service. If more than one domain controller serves the same domain, synchronization plug-in 205 is provided with a list of LDAP URLs for each of these domain controllers. In some embodiments, the LDAP URL for a store that requires SSL encryption is indicated by an indicator in the LDAP URL.

### Replica Handling

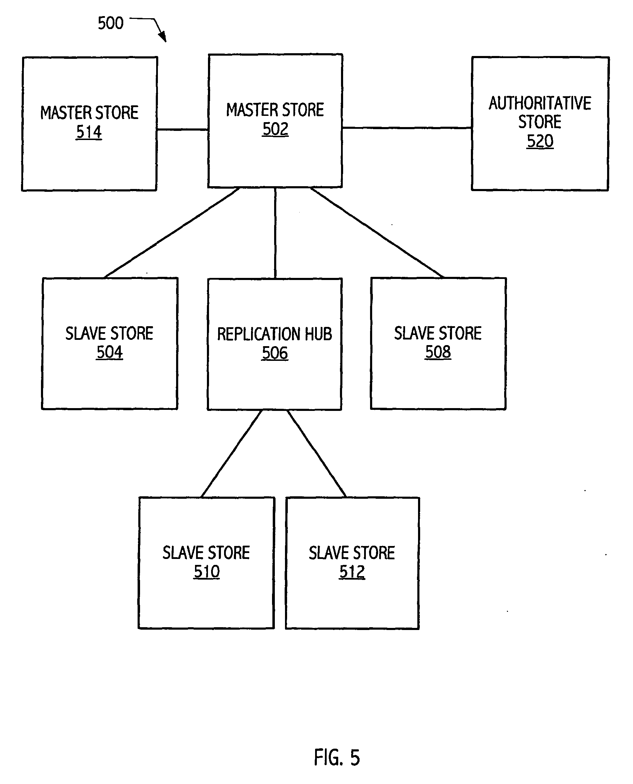

Referring to FIG. 5, an example replicated computer system includes authoritative store 520 and replicas 502-14, which are configured as master store 502, master store 514, slave stores 504, 508-512, and replication hub 506. In general, replica stores 502-514 and authoritative store 520 may be embodied as, or in, application servers (e.g., programs, computers, and/or systems of computers that manage resources), directory services, authentication or access control services, or other similar servers or services. Replicas 502-514 and authoritative store 520 may reside on the same or different computers. A particular one of replicas 502-514 may reside on a single computer or be distributed across a plurality of computers. The unit of replication, i.e., the set of entries to be replicated, may be a database or a subtree of a database or any other grouping of entries consistent with a replication protocol. Replicas 502-514 and authoritative store 520 include data entries, which may include user ids, passwords, credential data, or other information. Data entries, or some fields of data entries of authoritative store 520 may be encoded using a protective transform that is dissimilar to the protective transform, if any, used by replicas 502-514. Authoritative store 520 updates entries based on information changes that are subsequently communicated to replicas 502-514.

A master store is typically a writeable replica that updates entries and propagates updates to slave stores using a replication protocol. Master stores may maintain a change log that records modifications that have occurred in the master store. The change log may include a record describing an operation, e.g., an LDAP operation, that was performed to modify an entry. The change log may be accessible to other stores via a protocol such as LDAP, or it may be intended for internal use only and accessible by a plug-in that facilitates accesses. A replication hub typically maintains a read-only copy of replicated information. A replication hub typically receives updates from a master store and communicates changes to other read-only replicas or replications hubs. In some replication protocols, a replication hub maintains a change log. In general, a replica may accept changes for some entries, i.e., a replica may be a master with respect to some entries, while the replica may be read-only with respect to other entries, behaving as a slave store with respect to those read-only entries. For example, in multi-master replication, more than one replica may be concurrently configured as a master store for particular entries. A master store may accept changes, but also receive changes from other master stores. Accordingly, as used herein, the term replica encompasses stores or facilities that mediate replicated information (whether a master, slave, etc.).

Although FIG. 5 designates replica 502 as a master store, this designation is for illustration purposes only and a designation as a master store, replication hub, or slave store is not intended to be limiting. Replica stores may be configured and reconfigured as master stores, slave stores, or replication hubs according to a replication protocol. Replicas may be master stores, slave stores, and/or replication hubs with respect to particular entries. The relationship between two replicas may be specified in a replication agreement that defines the replication configuration. This agreement may be configured on the master store. In a multi-master replication configuration, a replication agreement may reside on each master store. A typical replication agreement may specify, but is not limited to, a database to be replicated, a replica store to which data is pushed, times during which replication may occur, credentials the master store supplies to bind to the replica store, and the method of securing a connection (e.g., SSL, client authentication).

In some replication protocols, replication may be initiated by a master store, allowing a single master store to push data to multiple slave stores. In some replication protocols, slave stores may be configured to pull data from a master store. In some replication protocols, a slave store may initiate replication by prompting a master store to communicate updates. The scheduling of these updates affects the consistency of corresponding entries of replica stores. Replica stores may be synchronized or strongly consistent, i.e., a replica provides the same information as a master store. Replicas may be weakly or loosely consistent, i.e., a replica may supply information that diverges from a master store and updates may be scheduled within a reasonable time.

In multi-master replication configurations, corresponding entries may be changed in different master stores. In some replication protocols, when replication occurs between the two stores, conflicting changes are resolved based on a timestamp associated with the change in each store, the most recent change taking precedence. In some replication protocols, orphan entry conflicts (i.e., an entry to be deleted that has child entries) may be detected by the slave store. These orphan entry conflicts may be resolved by inserting a temporary glue entry representing the parent. In some situations, a conflict may not be resolved automatically based on the timestamp, but may be resolved by manual intervention. To indicate a need for manual intervention, a replication protocol may include a conflict marker attribute, which, when set, may facilitate searching for entries requiring manual conflict resolution.

Referring back to FIG. 5, master store 502 accepts changes and communicates them to replicas 504-514. The information in master store 502 and replicas 504-514 may be encoded using similar or identical protective transforms. Communications between master store 502 and replicas 504-514 may be secured using a protective transform (e.g., SSL protocol). In some replication protocols, replicas 504-514 may authenticate master store 502 when master store 502 sends replication updates. Replica stores 502-514 may include entries for authenticating each master store (e.g., master store 502 or master store 514, as the case may be) from which replicas 502-514 obtain updates. These entries are typically not part of the replicated data, for security purposes and may have a special user profile that bypasses access control rules on the replica store.

In the configuration illustrated, each one of replicas 502-514 includes an instantiation of a synchronization plug-in, such as described above, to facilitate client authentication at a replica information store in a system. At startup, each instance of the synchronization plug-in registers itself as a pre-operation modify plug-in, so that modify requests will be passed to this plug-in before execution. Although the synchronization plug-in is installed on each of the illustrated replicas, the synchronization plug-in is configured to capture passwords on master stores 502 and 514 only. Other embodiments may instantiate differing plug-ins, selectively instantiate, or use similar techniques to achieve similar variation in function.

Similarly, the synchronization plug-in is configured to identify whether the local database is updateable locally. For example, entries of slave stores are generally not updateable locally. In this situation, the synchronization plug-in is informed of which servers in the directory service are masters for the slave store. The synchronization plug-in forwards the authentication to the master store and lets the instantiation of the plug-in corresponding to the master store verify the identity of the user and update information entries, if necessary. Once the entries of a master store are updated, the information of read-only and replication hubs is updated by a master store consistent with any suitable replication protocol implemented by the system. While any of a variety of replication protocols may be used or adapted for use in the transport(s) of information described herein, replication facilities such as those used by (and documented for) the iPlanet™ Directory Server may be used. See generally, Sun Microsystems, Inc., *iPlanet Directory Server 5. 1 Deployment Guide* (2001), chs. 6 and 8, *available at* http://docs.sun.com/source/816-5609-10. iPlanet is a trademark of Sun Microsystems, Inc. in the U.S. and in other countries.

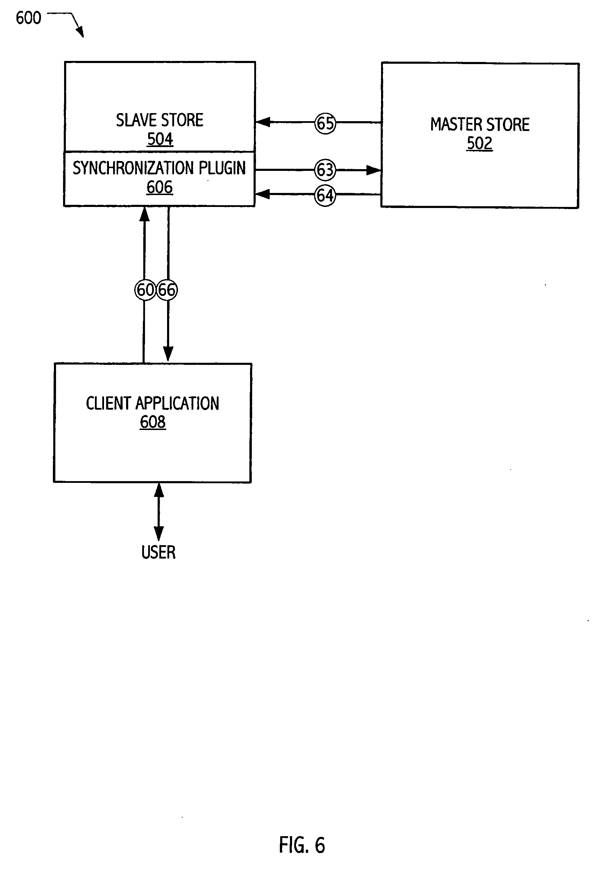

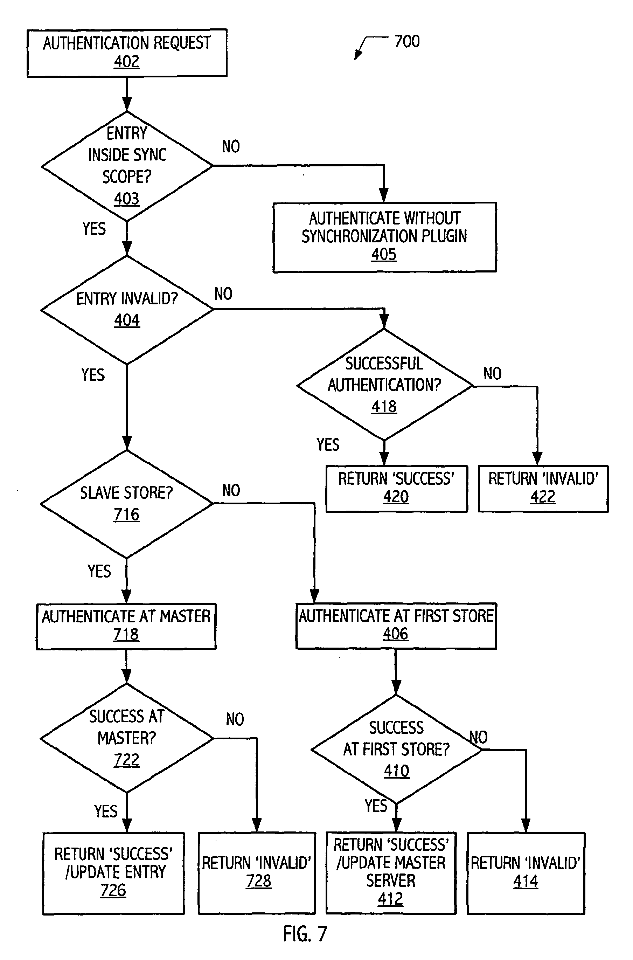

The operation of the synchronization plug-in in a replicated system is illustrated in FIG. 7, which is a modification of the embodiment of FIG. 5, including facilities for replica handling. Figures 6 and 7 describe the case of a slave store. An instantiation of the synchronization plug-in, synchronization plug-in 606, corresponds to slave store 504 and is called when client application 608 attempts to gain access to slave store 504. Entries in slave store 504 can be updated only by a master store (e.g., master store 502) via the system replication protocol.

Synchronization plug-in 606 receives (402) authentication request 60, initiated by client application 608. If the entry is not within the synchronization scope of synchronization plug-in 606 (403), synchronization plug-in 606 ceases the authentication process and authentication proceeds (405) without synchronization plug-in 606. If the entry is within the synchronization scope of synchronization plug-in 606, authentication proceeds by determining whether the entry is invalid (404).

If the applicable entry is valid, synchronization plug-in 606 then determines (418) if the information authenticates with the entry stored in slave store 504. If the information authenticates, synchronization plug-in 606 returns 'success' (420) to client application 608, via response 66. If the information fails to authenticate, synchronization plug-in 606 returns 'invalid' to client application 608, via response 66 (422). If the entry is invalid (404), synchronization plug-in 606 determines (716) that the information store is read-only and proceeds to authenticate (718) at master store 502. To facilitate authentication at master store 502 the information is encoded using any suitable protective transform and the encoded information is communicated to master store 502. Upon successful transformation of the clear text information into a protective encoded form, the clear text information is deleted.

If the information authenticates (722) with an entry of master store 502, then synchronization plug-in 606 returns a 'success' indication (726) to client application 608 in response 66. However, unlike in a master store, the synchronization plug-in associated with a read-only replica does not update the invalid entry. Instead, the master store updates the entry via a replication procedure. In FIG. 6, master store 502 updates an entry of slave store 504 by way of communication 65, which is compliant with the replication protocol of computer system 600. If authentication at master store 502 is unsuccessful (722) then synchronization plug-in 606 returns an 'invalid' indication (728) to client application 608.

The analysis prior to 716 and following a determination by 716 that the node is a master store is similar to the previous discussion of FIG. 2 and FIG. 4. In this case, 412 may also include updating any replicas via a replication procedure.

Referring to FIG. 5, master store 502 corresponds to second store 202 of FIG. 2 and is synchronized to authoritative store 520, which corresponds to first store 201 in FIG. 2. At least one entry of master store 502 is updated with changes to a corresponding entry of authoritative store 520, consistent with Figures 2-4, and the corresponding description. An agent, e.g., agent 204, may detect changes to authoritative store 520 and invalidate a corresponding entry of master store 502. The invalidation is also pushed to replicas 504-514. Upon an update to an entry of master store 502, e.g. in 412 of FIG. 4, master store 502 may push changes to read-only replicas 504-512.

In a multi-master replication configuration, the synchronization plug-ins corresponding to replicas 504-512 may failover to master store 514 if master store 502 becomes unavailable. Upon a change to an entry of a master store 502 (including changes to invalidation attributes), master store 502 pushes the change to master store 514, in addition to pushing the changes to read-only replicas 504-512. In one embodiment, replicas 502-514 apply changes in order. Entries of replicas 502-514 may be weakly-consistent with each other, i.e., an entry of replicas 504-512 may diverge from a corresponding entry of master store 502 or master store 514 while the entry of replicas 504-512 are invalidated and the corresponding entry of master store 502 or master store 514 is not invalidated. However, the entries of replicas 504-512 eventually converge to the entries of master store 502 and master store 514.

While the invention has been described with reference to various implementations and exploitations, and in particular with respect to synchronization of user access credentials, it will be understood that these embodiments are illustrative and that the scope of the invention is not limited to them.

Many variations, modifications, additions, and improvements are possible. For example, while application to particular password synchronization challenges and particular directory service domains have been described in detail herein, applications to other credentials, indeed other information entirely, as well as other directory service or information repositories will be appreciated by persons of ordinary skill in the art. In addition, varying replication protocols may be employed and a variety of suitable change detection, propagation and/or notation techniques may be used. Other appropriate transformations, including one-way, two-way, reversible or irreversible transformations, hashes and encryption, including public and/or private-key variations, may be employed in some embodiments. Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned. In general, structures and functionality presented as separate components in the example configurations may be implemented as a combined structure or component. Similarly, structures and functionality presented as a single component may be implemented as separate components.

## Claims

1. A method of synchronizing credentials between first and second stores that employ dissimilar protective transforms, the method comprising:
responsive to a change in the second store, invalidating a corresponding entry in the first store; and
upon receipt, by the first store, of an authentication request that includes a credential and which corresponds to the invalidated entry, chaining the authentication request to the second store and, if successful, updating the previously invalidated entry of the first store with the credential.

2. The method of claim 1,
wherein at least one of the first and second stores is embodied as a directory service.

3. The method of claim 1,
wherein at least one of the first and second stores is embodied as an authentication or access control service.

4. The method of claim 3,
wherein at least the first store is embodied as a service that provides authentication.

5. The method of claim of any preceding claim,
wherein the updating includes encoding the credential using a first of the dissimilar protective transforms; and
wherein the updating is performed without reversing a second of the dissimilar protective transforms.

6. The method of any preceding claim,
wherein at least one of the dissimilar protective transforms is generally irreversible.

7. The method of preceding claim,
wherein the change in the second store includes a change of the credential.

8. The method of any preceding claim,
wherein the change in the second store includes a change of an entry that encodes the credential.

9. The method of any preceding claim, further comprising:
accessing a change log of the second store to detect the change.

10. The method of any of claims 1 - 8, further comprising:
accessing a change notification service of the second store to detect the change.

11. The method of any preceding claim, further comprising:
calling an interface of the second store to detect the change.

12. The method of any preceding claim, further comprising:
intercepting the change and signaling same.

13. The method of any preceding claim,
wherein the updating includes revising the previously invalidated entry.

14. The method of any of claims 1 - 12,
wherein the updating includes replacing the previously invalidated entry with a valid instance thereof including the credential.

15. The method of any preceding claim,
wherein the invalidated entry is marked as such using an invalid, non-authoritative or expiry indicator.

16. The method of any preceding claim,
wherein the invalidated entry encodes the credential.

17. The method of any of claims 1 - 15,
wherein the invalidated entry includes at least a portion of a user or entity record corresponding to the credential.

18. The method of any preceding claim, further comprising:
causing the change in the second store.

19. The method of any preceding claim, further comprising:
upon receipt, by the first store, of a second authentication request including a second credential and not corresponding to an invalidated entry, authenticating against the first store and, if unsuccessful, chaining the authentication request to the second store.

20. The method of any preceding claim,
wherein at least one of the first and second stores is embodied, at least in part, as part of an operating system.

21. The method of any preceding claim,
wherein the first and second stores reside on a same computer.

22. The method of any preceding claim, embodied, at least in part, as a polling agent that detects the change and triggers the invalidating.

23. A computer program for implementing the method of any preceding claim.

24. A computer program product executable to synchronize a credential encoded by a first service with that encoded by a second service, wherein the first and second service encodings employ dissimilar protective transforms and wherein, for a first service credential encoding mapped to a corresponding second service encoding, the synchronization is performed in response to an invalidity indication for the first service credential encoding.

25. The computer program product of claim 24, further comprising:
a polling agent that detects a change in the second service and sets the invalidity indication in response thereto.

26. The computer program product of claim 24 or 25,
wherein the mapping is maintained by the first service.

27. The computer program product of any of claims 24 to 26,
wherein the invalidity indication is encoded by first service.

28. A password synchronization facility comprising:
an authentication service that chains to a second service authentication requests corresponding to invalidated entries of the authentication service and, on successful authentication against the second service, updates a corresponding credential encoding of the authentication service; and
a polling agent that detects changes to entries of the second service and triggers invalidation of the corresponding credential encoding of the authentication service.

29. A password synchronization facility comprising:
a polling agent that detects changes to entries of a credential store and triggers invalidation of corresponding credential encodings of an authentication service, thereby causing the authentication service to chain to a second service authentication requests corresponding to invalidated entries and, on successful authentication against the second service, updates a corresponding credential encoding of the authentication service.
